# EUROPEAN PATENT APPLICATION

(11) **EP 4 207 358 A2**
(43) Date of publication of application: **05.07.2023**
(21) Application number: 22215232.4
(22) Date of filing: 20.12.2022
(51) Int. Cl.: H01M 4/131, H01M 4/133, H01M 4/134, H01M 4/38, H01M 4/525, H01M 4/587, H01M 4/62, H01M 10/0525, H01M 4/02

(54) **LITHIUM SECONDARY BATTERIES**

(30) Priority: 04.01.2022 US 202263296315 P; 16.12.2022 US 202218083038
(71) Applicant: Prologium Technology Co., Ltd., Taoyuan City (TW)
(72) Inventor: YANG, Szu-Nan, Taoyuan City (TW)
(74) Representative: Cabinet Chaillot

(57) **Abstract**

The invention provides a lithium secondary battery including an ionic provider added to the positive electrode. The ionic provider does not involve in the electrochemical reaction of the lithium secondary battery during charging and discharging. The ionic provider can absorb thermal energy caused by the rising temperature of the lithium secondary battery to release the reactive anionic group. The reactive anionic group will react with the positive active material to reduce the reversibility of the positive active material. Also, the positive active material will become to a lower energy state from a higher energy state with lithium-ion extraction to effectively suppress the thermal runaway of the lithium secondary battery.

## Description

### BACKGROUND OF THE INVENTION

### CROSS REFERENCES TO RELATED APPLICATIONS

This application claims benefit under 35 U.S.C.§119(a) of U.S. Provisional Patent Application No. 63/296,315 filed January 04, 2022, and the entire contents of which are hereby incorporated by reference for all purposes.

### Field of Invention

The present invention relates to a lithium secondary battery, in particular to a lithium secondary battery capable of suppressing thermal runaway.

### Related Art

Because lithium-ion batteries are widely used in various products, such as vehicles, wearable products for consumers and industrial applications, portable devices and energy storage devices and so on, they are almost applied in all areas of human daily life. However, the event of accidents for the lithium-ion batteries are heard from time to time, such as the fire or explosion of mobile phone batteries and electric vehicles. These are all because the lithium ion batteries still lack comprehensive and effective solutions for safety issues.

The main cause of unsafe event for fire or explosion in the lithium batteries is the thermal runaway. And the main cause of the thermal runaway of the lithium batteries is heat, which is the exothermic reactions result from the thermal cracking, induced by the elevated temperature, of the SEI (solid electrolyte interface) film, the electrolyte, the binder, and the positive and negative active materials in the battery. The current methods for suppression thermal runaway can be classified into two types: outside the battery cell and inside the battery cell, depending on the activated location for safety mechanism. For the type of outside the battery cell, a monitoring system is utilized, which uses digital arithmetic simulation. For the type of inside the battery cell, it can be further divided into physical or chemical methods. In the digital monitoring system outside the battery cell, the dedicated protection circuit and the dedicated management system on the outside of the battery cell are utilized to enhance the safety monitoring of the battery during the usage process. For the physical type of inside the battery cell, such as thermal shutdown separator, at elevated temperature for the battery cell, the holes of the separator are closed to block the passage of the ions.

For the chemical type of inside the battery cell, it can be defined as a scale controlled type or an electrochemical reaction type. In the scale controlled type, the flame retardant is added into the electrolyte to control the scale of the thermal runaway. The examples of the electrochemical reaction types are as follows:
a. The monomer or oligmar is added into the electrolyte. The polymerization will be occurred when the temperature rises to reduce the rate of the ion migration. Therefore, the ionic conductivity decreases as the temperature rises, and the electrochemical reaction rate in the cell slows down;
b. A positive temperature coefficient (PTC) resistance material is sandwiched between the positive electrode layer or the negative electrode layer and the adjacent current collecting layer. When the temperature of the battery cell is elevated, the electrical insulation ability is enhanced. The electric power transmission efficiency between the positive electrode layer or the negative electrode layer between the adjacent current collecting layer is reduced and the electrochemical reaction rate is also decreased; and
c. A modified layer is formed on the surface of the positive active material. When the temperature of the battery cell is elevated, the modified layer is transformed into a dense film, which increases the resistance of the charge transfer to reduce the electrochemical reaction rate.

However, the above methods are aimed only for passive blocking the ion/electron migration pathway to reduce the heat generation, not for the main source to generate the maximum energy to cause the thermal runaway and the main reaction body of the entire electrochemical reaction, i.e. the active materials.

Therefore, this invention provides a brand new lithium secondary battery to solve the problem of thermal runaway from the active materials.

### SUMMARY OF THE INVENTION

It is an objective of this invention to provide a lithium secondary battery, which includes an ionic provider disposed in the positive electrode. The ionic provider does not involve in the charging and discharging operation. The ionic provider can absorb thermal energy to release the reactive anionic group. The reactive anionic group will react with the positive active material to reduce the reversibility of the positive active material. Also, by some specific reactive anion group, the lattice structure of the positive active material will become to a lower energy state from a higher energy state with lithium-ion extraction. Therefore, the positive electrode with lithium-ion extraction will become stable to effectively suppress the thermal runaway of the lithium secondary battery.

It is another objective of this invention to provide a lithium secondary battery, which includes an ionic provider disposed in the positive electrode and a lithium receiver disposed in the negative electrode. The ionic provider can absorb thermal energy to release the reactive anion group to react with the positive active material to improve the oxygen binding ability in the positive active material with lithium-ion extraction. Therefore, the release of a large amount of atomic oxygen, resulting from the locations of lithium-ion extraction, is avoided. For the negative electrode, the excessive lithium embedded in the negative electrode will diffuse to the lithium receiver to reduce the lithium concentration of the negative electrode. Therefore, it will present a stable state to effectively suppress the thermal runaway.

In order to implement the abovementioned, this invention discloses a lithium secondary battery including a positive electrode, a negative electrode, and an electrolyte system providing ionic conductivity between the positive electrode and the negative electrode. The lithium ions are allowed to move between the positive electrode and the negative electrode to perform the electrochemical reaction for charging and discharging. An ionic provider, which is inactive during the electrochemical reaction, is added to the positive electrode. The ionic provider includes a reactive anionic group and a cation bonded to the reactive anionic group. The ionic provider can absorb thermal energy to release the reactive anionic group. The reactive anionic group will react with the positive active material to reduce the reversibility of the positive active material. Also, by some specific reactive anion group, the lattice structure of the positive active material will become to a lower energy state from a higher energy state with lithium-ion extraction. Therefore, the positive electrode with lithium-ion extraction will become stable to prevent thermal runaway events from occurring.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:

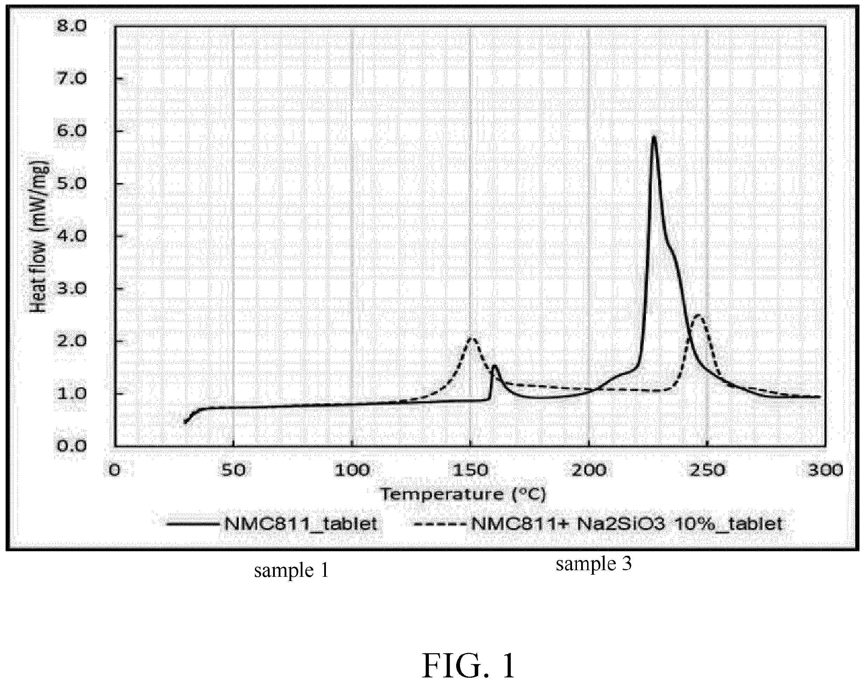

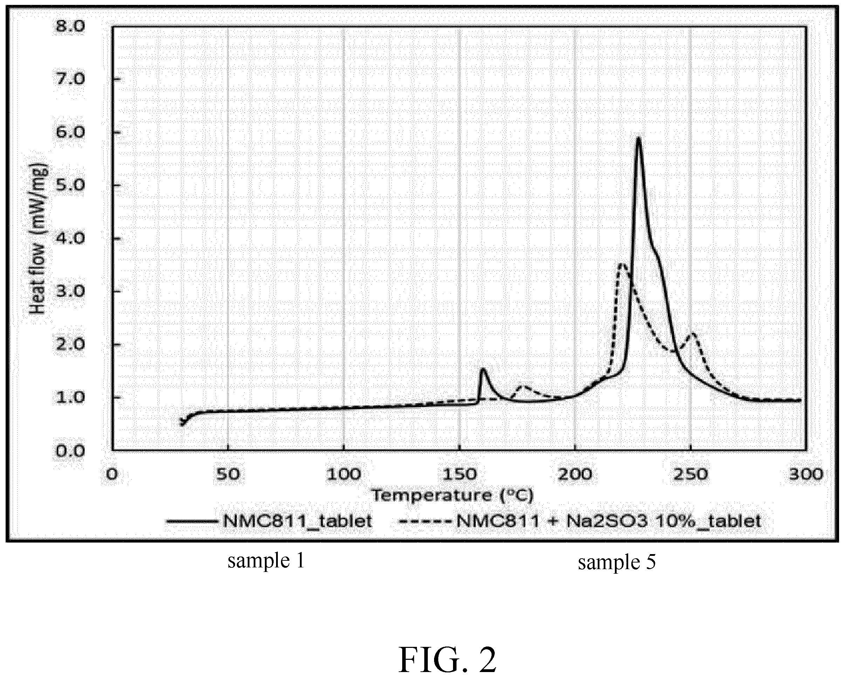

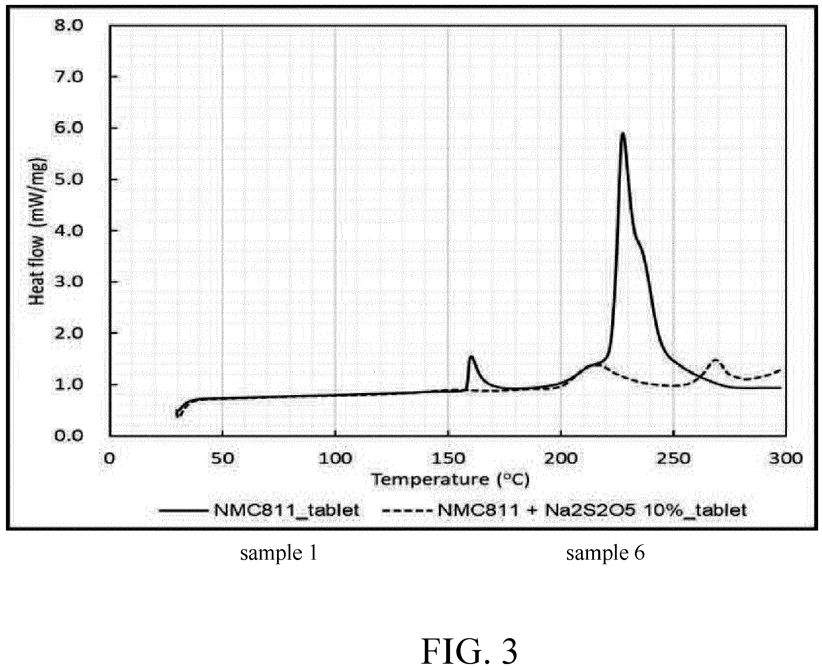

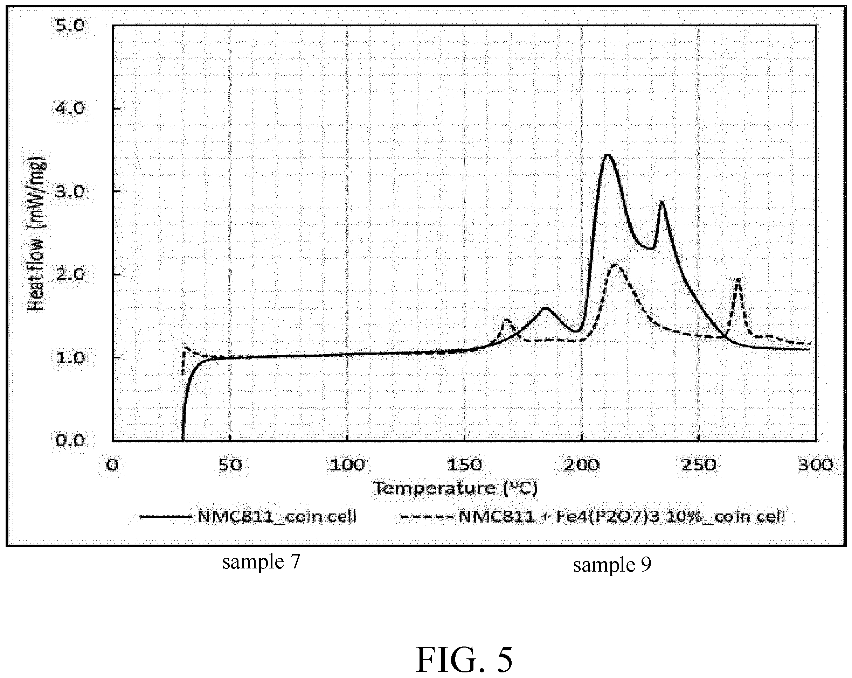

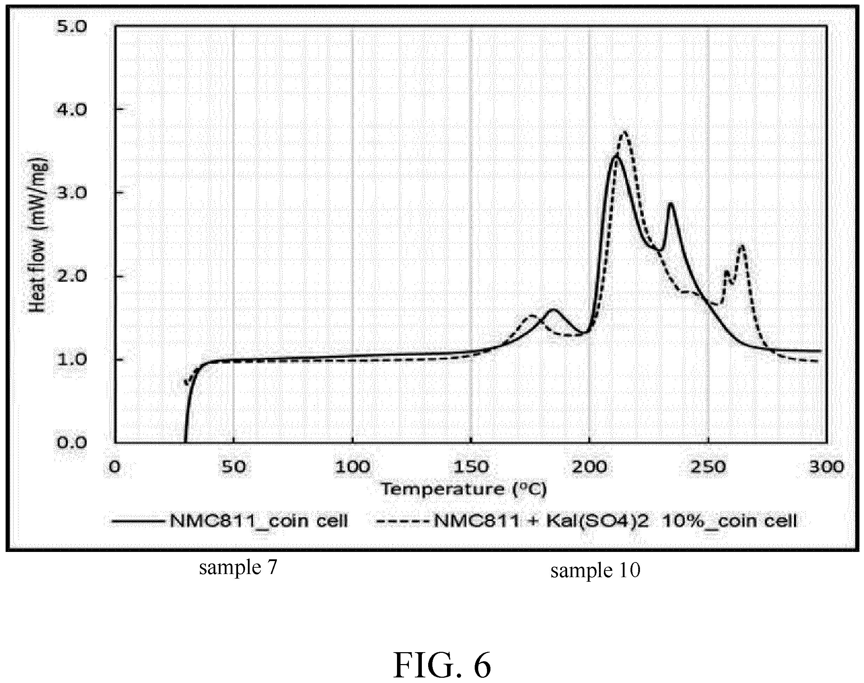

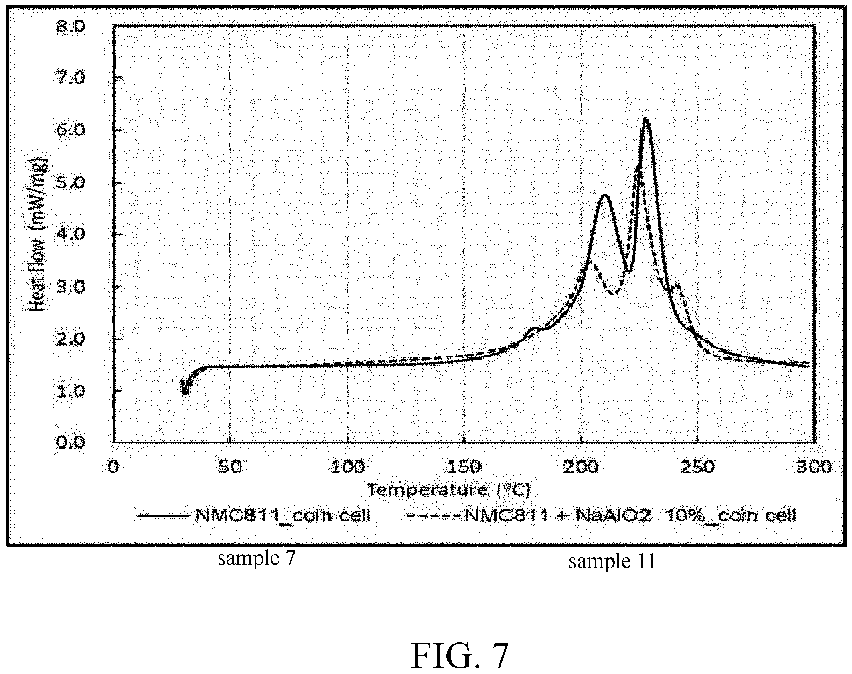

FIGS. 1-7 are thermograms of the differential scanning calorimeter with or without the ionic provider in accordance with the present invention.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the general inventive concept. As used herein, the singular forms "a" , "an" and "the" are intended to include the plural forms as well, unless the context clearly indicates otherwise. Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

This invention discloses a lithium secondary battery capable of suppressing thermal runaway effectively, which includes a positive electrode having a positive active material, a negative electrode having a negative active material, and an electrolyte system providing ionic conductivity between the positive electrode and the negative electrode. The lithium ions are allowed to move between the positive electrode and the negative electrode to perform the electrochemical reaction for charging and discharging. An ionic provider is added in the positive electrode. The ionic provider is inactive during the electrochemical reaction, i.e. does not involve in the electrochemical reaction. The ionic provider includes a reactive anionic group and a cation bonded to the reactive anionic group. The ionic provider releases the reactive anionic group after absorbing thermal energy. The reactive anionic group will react with the positive active material to reduce the reversibility/activity of the positive active material. Also, by some specific reactive anion group, the lattice structure of the positive active material will become stable. Therefore, the positive active material will become to a lower energy state from a higher energy state with lithium-ion extraction to suppress the thermal runaway of the lithium secondary battery. The thermal energy absorbed by the ionic provider may be provided by the lithium secondary battery when the temperature of the lithium secondary battery reaches to a first temperature. The strength of the bonding between the cation and the reactive anionic group can be adjusted by selecting the materials thereof by those skilled in the art. At the first temperature, the ionic provider can obtain enough kinetic energy to break the bonding of the cation and the reactive anionic group, so that the reaction anionic group can move freely. Thus, the ionic provider of this invention does not dissociate in a polar solution to releases the reactive anionic group, i.e. the ionic provider is not dissociable in a polar solution. The reactive anionic group is driven by thermal energy to make the reactive anionic group be ionized.

The reaction anionic group may have at least a boron-oxygen bond, a sulfur-oxygen bond, a silicon-oxygen bond, an aluminum-oxygen bond or a phosphorus-oxygen bond. The ionic provider is disposed on the positive electrode of the lithium secondary battery and the ionic provider is adjacent or directly contacted to the positive active material particle of the positive electrode. For example, the ionic provider is mixed with the positive active material particles of the positive electrode to form a random distribution between the positive active material particles. Alternatively, the ionic provider is coated on the surface of the positive electrode. The electrolyte system may be solid electrolyte, semi-solid electrolyte, liquid electrolyte or combinations thereof. The ionic provider does not dissolve in the electrolyte system.

The reaction anionic group with at least a boron-oxygen bond, a sulfur-oxygen bond, a silicon-oxygen bond, an aluminum-oxygen bond or a phosphorus-oxygen bond can react with the positive active material to make the positive electrode be invalid to effectively suppress the thermal runaway. In this embodiment, the reactive anionic group is selected from AlO₂⁻, PO₄³**⁻,** P₂O₇⁴⁻**,** AlSiO₄⁻, B₄O₇²⁻, SO₃-R⁻, SO₂-R⁻, SiO₃⁻, HPO₄²⁻, SO₃²⁻, H₂PO₂⁻**,** HPO₃²⁻, P₂O₆⁻, P₃O₉³⁻, BO₂⁻, BO³⁻, P₄O₁₃⁶⁻, SO₇²⁻, S₂O₃²⁻, SO₅²⁻, S₂O₈²⁻, S₂O₆²⁻, S₂O₄²⁻, P₃O₁₀⁵⁻, B₂O₅⁴⁻, H₂PO₄⁻, or S₂O₅²⁻. R is selected from any substituent group. For example, R is selected from a substituent group containing hydrogen, alkyl, aryl, aralkyl or alkaryl. The reactive anionic group can be symmetrical or asymmetrical, but the asymmetrical reactive anionic group is preferred to the symmetrical reactive anionic group. Take sulfur-containing oxide for example, SO₇²⁻ or SO₃²⁻ has a greater asymmetrical structure than that of SO₄²⁻, and SO₇²⁻ has a greater asymmetrical structure than that of SO₃²⁻. Therefore, SO₇²⁻ is preferred to SO₃²⁻ and SO₃²⁻ is preferred to SO₄²⁻. For phosphorus oxide, P₂O₇⁴ has a greater asymmetrical structure than that of PO₄³⁻. P₂O₇⁴⁻ is preferred to PO₄³⁻. SO₄²⁻ is symmetrical, which is almost not possible to separate from the action. Therefore, it is difficult to serve as the reaction anionic group of this invention. In addition, in the case of reacting with the positive active material with the reactive anionic group, the selection of the cation can be more diversified, for example, metal ions with a valence ranging from +1 to +3, such as sodium, potassium, copper, magnesium, calcium or iron, etc. Therefore, compounds such as copper pyrophosphate (Cu₂P₂O₇) or iron pyrophosphate (Fe₄(P₂O₇)₃) can be adapted.

Furthermore, the ionic provider can also have a main chain anionic group with a larger molecular weight than that of the reaction anionic group. The reaction anionic group is located at the end or side position of the main frame anionic group.

In this invention, a lithium receiver, or so-called new lithium host, is further disposed in the negative electrode of the lithium secondary battery. The lithium receiver is capable of reacting with lithium to form lithium alloy or lithium compound, but does not involve in the electrochemical reaction of the positive and negative electrodes of the lithium secondary battery during charging and discharging. It means that the lithium receiver is inactive during lithium alloying or lithium-ion insertion in the negative electrode. The electric potential which the lithium receiver is reacted with lithium is different from the electric potential which the negative active material of the negative electrode is reacted with lithium. For example, the electric potential which the lithium receiver is reacted with lithium, to form lithium alloy or lithium compound, is higher than from the electric potential which the negative active material of the negative electrode is reacted with lithium, to form lithium alloy or lithium compound. Therefore, the lithium receiver does not involve in charging and discharging of the lithium secondary battery. The lithium receiver is disposed on the negative electrode of the lithium secondary battery and the lithium receiver is adjacent or directly contacted to the negative active material. For example, the lithium receiver is mixed with the negative active material particles of the negative electrode to distribute between the negative active material particles or is coated on the surface of the negative electrode.

During the charging operation of the lithium secondary battery, the excessive deposition and diffusion of lithium ions to the negative electrode. The negative electrode will become to demonstrate the material characteristics of lithium from the characteristics of the raw material. That is extremely unstable. However, lithium atoms will diffuse from the negative electrode to the lithium receiver driven by the concentration difference and the thermal energy of the lithium secondary battery at a second temperature. The lithium concentration at the negative electrode is reduced to demonstrate the material properties near to the original raw material. Therefore, it will present a stable state with lower energy. The second temperature may be the same or different with the first temperature. The negative active material of the negative electrode may be carbon, silicon or lithium metal. The lithium receiver may be an inorganic material, such as Li₄Ti₅O₁₂, Fe₄(P₂O₇)₃, FeS₂, Cu₂P₂O₇, TiS₂ or a mixture thereof. For example, FeS₂ is alloyed with lithium at 1.5-2.5 volts, and the carbon, silicon or lithium metal performs electrochemical reaction with lithium at 0-0.1 volts. Therefore, the lithium receiver is inactive during lithium alloying or lithium-ion insertion in the negative electrode.

Alternatively, the lithium receiver may be an organic polymer, which can withstand the temperature above 150 degrees C. The organic polymer is alloyed with lithium at 1.5-3.5 volts. The negative active material can be pretreated to avoid the above operating voltage of the organic polymer. In case of the negative active material is carbon or silicon, the carbon or silicon is lithiated to avoid the above operating voltage of the organic polymer. Also, The organic polymer may be polyimide(PI), polyimide derivatives such as polyetherimide (PEI), polyaryletherketone(PAEK) or a mixture thereof. For example, PI is alloyed with lithium at 2.5 volts.

The lithium secondary battery may include the ionic provider or further include the lithium receiver. The lithium secondary battery of this invention may further include a separator, which is composed of an electrically insulating material with holes to allow the ions pass through or an ionic conductive and electrically insulating material, such as a solid electrolyte. The negative active material of the negative electrode may be carbon material, silicon-based material, a mixture of both, or lithium metal. Examples of the carbon material may include graphitized carbon materials and amorphous carbon materials, such as natural graphite, modified graphite, graphitized mesocarbon microbeads, soft carbon (such as coke) and hard carbon. The silicon-based material include silicon, silicon oxide, silicon-carbon composites, and silicon alloy. The positive active material of the positive electrode may be lithium cobalt manganese oxide, wherein the weight percentage of nickel is more than 75%, such NCM811.

Various experiments are carried out below to verify the effect of this invention. The electrolyte used in this experiment is a non-aqueous electrolyte, such as an organic electrolyte, a colloidal electrolyte, a polymer electrolyte, or a carbonate solvent, such as EC(ethylene carbonate), PC(polycarbonate), added with salts, such as LiPF₆, LiBF₄, etc.

The following Table 1 is the difference table of generated oxygen between samples with and without the ionic provider. The composition of the sample 1 is 76.61% NCM811, 3.26% electrically conductive material, 1.63% adhesive and 18.5% electrolyte by weight. The production method of the sample 1 is to mix 76.61% NCM811, 3.26% electrically conductive material, 1.63% adhesive and 18.5% electrolyte by weight and coat on a positive current collector to form a positive active material layer. Then a separator, a negative active material layer and a negative current collector are sequentially stacked on the surface of the positive active material layer. A sealing frame sandwiched between the positive current collector and the negative current collector is used to seal the positive active material layer, the separator and the negative active material layer between the positive current collector, the sealing frame and the negative current collector to form a laminated battery sheet. The laminated battery sheet is formed with a 100% SOC(state of charge). Then the formed positive active material layer is scraped off and pressed under 0.9 N for 1 minute to form a sheet to obtain the sample 1. The production method of the sample 2 is to mix 76.61% NCM811, 3.26% electrically conductive material, 1.63% adhesive and 18.5% electrolyte by weight and coated on a positive current collector to form a positive active material layer. Then a separator, a negative active material layer and a negative current collector are sequentially stacked on the surface of the positive active material layer. A sealing frame sandwiched between the positive current collector and the negative current collector is used to seal the positive active material layer, the separator and the negative active material layer between the positive current collector, the sealing frame and the negative current collector to form a laminated battery sheet. The laminated battery sheet is formed with a 100% SOC(state of charge). Then the formed positive active material layer is scraped off to mix and grind with Na₂B₄O₇ with the same weight. The mixture is pressed under 0.9 N for 1 minute to form a sheet to obtain sample 2. In sample 2, Na₂B₄O₇ serves as the ionic provider. The sample 3-6 are produced in the same manner as described in sample 2 except that the ionic provider, i.e. Na₂B₄O₇, is replaced with Na₂SiO₃, NaAlSiO₄, Na₂SO₃ and Na₂S₂O₅. Samples 1-6 are analysed by GC-MS(gas chromatography-mass spectrometry) respectively. In this analysis, samples 1-6 are placed into special sample bottles for GC-MS analysis. In a glove box, the oxygen in the sample bottles is replaced with argon. Then, use parafilm to seal the sample bottles to avoid air infiltration. In GC-MS analysis, the headspace extraction temperature is 200°C, and extraction time is 20 minutes. Then sample 1 ml to heat from 40 ° C to 250°C. As following Table 1, after the above GC-MS analysis, the generated oxygen of samples with the ionic provider can be greatly reduced.

**Table 1**

| Item | ionic provider | generated oxygen index |
|---|---|---|
| sample 1 (base) | none | 1 |
| sample 2 | Na₂B₄O₇ | 30.90% |
| sample 3 | Na₂SiO₃ | 8.20% |
| sample 4 | NaAlSiO₄ | 70.50% |
| sample 5 | Na₂SO₃ | 64.60% |
| sample 6 | Na₂S₂O₅ | 12.00% |

Please refer to FIGS. 1-3, which are thermograms of the differential scanning calorimeter with sample 3, 5 or 6 to sample 1. An appropriate amount of these samples are taken by a spatula. Then place them on the DSC special sample tray, and seal the sample tray. The DSC test is carried out on the samples under the temperature rising from 30°C to 300°C at a rate of 5°C/min. It can be seen from the figures that the samples with the ionic provider can shift the trigger temperature of the exothermic reaction backward. Therefore, the lithium secondary battery is allowed to withstand higher temperature.

The following Table 2 is the difference table of generated oxygen between samples with and without the lithium receiver.

The composition of sample 7 is 76.61% NCM811, 3.26% electrically conductive material, 1.63% adhesive and 18.5% electrolyte by weight. The production method of the sample 7 is to mix NCM811, electrically conductive material, adhesive and electrolyte to form an electrode film. Then the electrode film is used as a positive electrode of a coin cell. The coin cell is formed with a 100% SOC(state of charge) thereof. Then the electrode film is directly taken out as sample 7. The composition of sample 8 is 66.61% NCM811, 3.26% electrically conductive material, 1.63% adhesive, 18.5% electrolyte and 10% Cu₂P₂O₇ by weight. The production method of the sample 8 is to mix 66.61% NCM811, 3.26% electrically conductive material, 1.63% adhesive, 18.5% electrolyte and 10% Cu₂P₂O₇ by weight to form an electrode film. The electrode film is used as a positive electrode of a coin cell. The coin cell is formed with a 100% SOC(state of charge) thereof. Then the electrode film is directly taken out as sample 8. In sample 8, Cu₂P₂O₇ serves as the ionic provider. The sample 9-11 are produced in the same manner as described in sample 8 except that the ionic provider, i.e. Cu₂P₂O₇, is modified. In sample 9, Fe₄(P₂O₇)₃ serves as the ionic provider. In sample 10, KAl(SO₄)₂ serves as the ionic provider. In sample 11, NaAlO₂ serves as the ionic provider. These samples are analysed by GC-MS(gas chromatography-mass spectrometry) respectively. In this analysis, the samples are placed into special sample bottles for GC-MS analysis. In a glove box, the oxygen in the sample bottles is replaced with argon. Then, use parafilm to seal the sample bottles to avoid air infiltration. In GC-MS analysis, the headspace extraction temperature is 200°C, and extraction time is 20 minutes. Then sample 1 ml to heat from 40°C to 250°C. As following Table 2, after the above GC-MS analysis, the generated oxygen of samples with the ionic provider can be greatly reduced compared to that of sample 7.

**Table 2**

| Item | ionic provider | generated oxygen index |
|---|---|---|
| sample 7(base) | none | 1 |
| sample 8 | Cu₂P₂O₇ | 40.90% |
| sample 9 | Fe₄(P₂O₇)₃ | 81.70% |
| sample 10 | KAl(SO₄)₂ | 131.70% |
| sample 11 | NaAlO₂ | 73.50% |

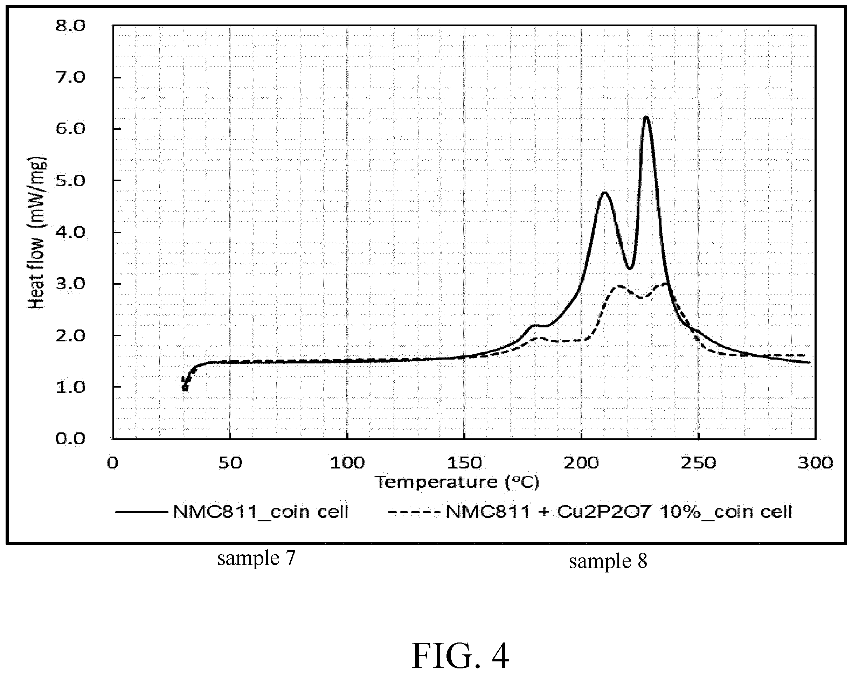

Please refer to FIGS. 4-7, which are thermograms of the differential scanning calorimeter with sample 8, 9, 10 or 11 to sample 7. An appropriate amount of these samples are taken by a spatula. Then place them on the DSC special sample tray, and seal the sample tray. The DSC test is carried out on the samples under the temperature rising from 30 ° C to 300 ° C at a rate of 5 ° C/min. It can be seen from the figures that the samples with the ionic provider can shift the trigger temperature of the exothermic reaction backward. Therefore, the lithium secondary battery is allowed to withstand higher temperature.

The following Table 3 is the difference table of generated gas between samples with and without the lithium receiver. The composition of the sample 12 is 62.153% C/SiO, 2.049% electrically conductive material, 4.098% adhesive and 31.7% electrolyte by weight. The production method of the sample 12 is to mix 62.153% C/SiO, 2.049% electrically conductive material, 4.098% adhesive and 31.7% electrolyte by weight and coat on a negative current collector to form a negative active material layer. Then a separator, a positive active material layer and a positive current collector are sequentially stacked on the surface of the negative active material layer. A sealing frame sandwiched between the positive current collector and the negative current collector is used to seal the positive active material layer, the separator and the negative active material layer between the positive current collector, the sealing frame and the negative current collector to form a laminated battery sheet. The laminated battery sheet is formed with a 100% SOC(state of charge). Then the formed negative active material layer is scraped off and pressed under 0.9 N for 1 minute to form a sheet to obtain the sample 12. The composition of the sample 13 is 31.0765% C/SiO, 1.0245% electrically conductive material, 2.049% adhesive, 15.85% electrolyte and 50% CaHPO₄ by weight. The production method of the sample 13 is to mix 62.153% C/SiO, 2.049% electrically conductive material, 4.098% adhesive and 31.7% electrolyte by weight and coat on a negative current collector to form a negative active material layer. Then a separator, a positive active material layer and a positive current collector are sequentially stacked on the surface of the negative active material layer. A sealing frame sandwiched between the positive current collector and the negative current collector is used to seal the positive active material layer, the separator and the negative active material layer between the positive current collector, the sealing frame and the negative current collector to form a laminated battery sheet. The laminated battery sheet is formed with a 100% SOC(state of charge). Then the formed negative active material layer is scraped off to mix and grind with CaHPO₄ with the same weight. The mixture is pressed under 0.9 N for 1 minute to form a sheet to obtain the sample 13.

The production method of the sample 14 is almost the same with the production method of the sample 13. Only CaHPO₄ is replaced with Cu₂P₂O₇. GC-MS is used to analyse oxygen, carbon monoxide and gaseous alkane and GC-TCD is used to analyse hydrogen. In the analysis, the headspace extraction temperature is 200°C, and extraction time is 20 minutes. Then sample 1 ml to heat from 40°C to 250°C. As following Table 3, after the above analysis, the generated oxygen of sample 13 with non-ionic provider is increased compared with sample 12, and the generated oxygen of sample 14 with ionic provider is reduced compared with sample 12.

**Table 3**

| | | | | | |
|---|---|---|---|---|---|
| Item | ionic provider | generated oxygen index | generated CO index | generated CO&CH index | generated H₂ index |
| sample 12(base) | none | 1 | - | - | - |
| sample 13 | CaHPO₄ | 108.93% | - | - | - |
| sample 14 | Cu₂P₂O₇ | 77.81% | - | - | - |

The following Table 4 is the difference table of generated gas between samples with and without the lithium receiver. The composition of sample 15 is 62.153% C/SiO, 2.049% electrically conductive material, 4.098% adhesive and 31.7% electrolyte by weight. The production method of the sample 15 is to mix 62.153% C/SiO, 2.049% electrically conductive material, 4.098% adhesive and 31.7% electrolyte by weight to form an electrode film. Then the electrode film is used as a positive electrode of a coin cell. The coin cell is formed with a 100% SOC(state of charge) thereof. Then the electrode film is directly taken out as sample 15. The composition of sample 16 is 52.153% C/SiO, 2.049% electrically conductive material, 4.098% adhesive, 31.7% electrolyte and 10% Cu₂P₂O₇ by weight. The production method of the sample 16 is to mix all the above-mentioned materials to form an electrode film. Then the electrode film is used as a positive electrode of a coin cell. The coin cell is formed with a 100% SOC(state of charge) thereof. Then the electrode film is directly taken out as sample 16. The production method of the sample 17 is almost the same with the production method of the sample 16. Only Cu₂P₂O₇ is replaced with Fe₄(P₂O₇)₃. Samples 15 to 17 are analysed by GC-MS/GC-TCD(gas chromatography-thermal conductivity detector) respectively. In this analysis, samples 15 to 17 are placed into special sample bottles for GC-MS/GC-TCD analysis. In a glove box, the oxygen in the sample bottles is replaced with argon. Then, use parafilm to seal the sample bottles to avoid air infiltration. GC-MS is used to analyse oxygen, carbon monoxide and gaseous alkane and GC-TCD is used to analyse hydrogen. In the analysis, the headspace extraction temperature is 200°C, and extraction time is 20 minutes. Then sample 1 ml to heat from 40°C to 250°C. As following Table 4, the generated gas of samples 16 to 17 with ionic provider can be greatly reduced compared with sample 15.

**Table 4**

| | | | | | |
|---|---|---|---|---|---|
| Item | iconic provider | generated oxygen index | generated CO index | generated CO&CH index | generated H₂ index |
| sample 15(base) | none | 1 | 1 | 1 | 1 |
| sample 16 | Cu₂P₂O₇ | 18.40% | 5.70% | 3.50% | 40.60% |
| sample 17 | Fe₄(P₂O₇)₃ | 3.10% | 6.30% | 3.60% | 65.60% |

Accordingly, the present invention provides a lithium secondary battery capable of suppressing thermal runaway. An ionic provider is added to the positive electrode or a lithium receiver is further added to the negative electrode. The ionic provider can absorb thermal energy caused by the rising temperature of the lithium secondary battery to release the reactive anionic group. The reactive anionic group will react with the positive active material to reduce the reversibility/activity of the positive active material. Also, by some specific reactive anion group, the lattice structure of the positive active material will become to a lower energy state from a higher energy state with lithium-ion extraction. Therefore, the positive electrode with lithium-ion extraction will become stable. For the negative electrode, the lithium receiver is used to receive the excessive lithium to demonstrate the material properties near to the original raw material of the negative electrode. Therefore, it will present a stable state to effectively suppress the thermal runaway.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A lithium secondary battery, comprising:
a positive electrode having a positive active material;
a negative electrode having a negative active material;
an electrolyte system providing ionic conductivity between the positive electrode and the negative electrode to allow lithium ions to move between the positive electrode and the negative electrode to perform an electrochemical reaction for charging and discharging; and
an ionic provider, added in the positive electrode and being inactive during the electrochemical reaction, wherein the ionic provider includes an reactive anionic group and a cation bonded to the reactive anionic group, and the ionic provider releases the reactive anionic group by absorbing thermal energy to react with the positive active material;
wherein the reactive anionic group has at least a boron-oxygen bond, a sulfur-oxygen bond, a silicon-oxygen bond, an aluminum-oxygen bond or a phosphorus-oxygen bond.

2. The lithium secondary battery of claim 1, wherein the positive active material is lithium cobalt manganese oxide, wherein the weight percentage of nickel is more than 75%.

3. The lithium secondary battery of claim 1, wherein the reactive anionic group is AlO₂⁻, PO₄³⁻, P₂O₇⁴⁻, AlSiO₄⁻, B₄O₇²⁻, SO₃-R⁻, SO₂-R⁻, SiO₃⁻, HPO₄²⁻, SO₃²⁻, H₂PO₂⁻, HPO₃²⁻, P₂O₆⁻, P₃O₉³⁻, BO₂⁻, BO³⁻, P₄O₁₃⁶⁻, SO₇²⁻, S₂O₃²⁻, SO₅²⁻, S₂O₈²⁻, S₂O₆²⁻, S₂O₄²⁻, P₃O₁₀⁵⁻, B₂O₅⁴⁻, H₂PO₄⁻, or S₂O₅²⁻, wherein R is a substituent group selected from the group consisting of hydrogen, alkyl, aryl, aralkyl and alkaryl.

4. The lithium secondary battery of claim 1, wherein the reactive anionic group is asymmetrical.

5. The lithium secondary battery of claim 4, wherein the reactive anionic group is SO₇²⁻ or SO₃²⁻.

6. The lithium secondary battery of claim 4, wherein the reactive anionic group is SO₇²⁻.

7. The lithium secondary battery of claim 4, wherein the reactive anionic group is P₂O₇⁴⁻.

8. The lithium secondary battery of claim 1, wherein the ionic provider have a main chain anionic group with a larger molecular weight than that of the reaction anionic group, and the reaction anionic group is located at the end or side position of the main frame anionic group.

9. The lithium secondary battery of claim 1, wherein the ionic provider is distributed between positive active material particles or is coated on a surface of the positive electrode.

10. The lithium secondary battery of claim 1, further comprises a lithium receiver distributed between negative active material particles or coated on a surface of the negative electrode, wherein the lithium receiver is capable of reacting with lithium to form lithium alloy or lithium compound, but does not involve in the electrochemical reaction; wherein an electric potential which the lithium receiver is reacted with lithium is different from an electric potential which the negative active material of the negative electrode is reacted with lithium.

11. The lithium secondary battery of claim 10, wherein the lithium receiver is an inorganic material or an organic polymer, wherein the inorganic material comprises Li₄Ti₅O₁₂, Fe₄(P₂O₇)₃, FeS₂, Cu₂P₂O₇, TiS₂ or a mixture thereof; wherein the organic polymer comprises polyimide (PI), polyimide derivatives or a mixture thereof.

12. The lithium secondary battery of claim 1, wherein the ionic provider is not dissociable in a polar solution.

13. The lithium secondary battery of claim 1, wherein the negative active material is carbon, silicon or lithium metal.

14. The lithium secondary battery of claim 1, wherein the cation has a valence ranging from +1 to +3.
